# EUROPEAN PATENT SPECIFICATION

(11) **EP 2 459 630 B1**
(45) Date of publication and mention of the grant of the patent: **16.03.2016**
(21) Application number: 10737418.3
(22) Date of filing: 15.07.2010
(51) Int. Cl.: C08J 9/36

(54) **THERMALLY INSULATING POLYMER FOAM AND AEROGEL COMPOSITE ARTICLE**
WÄRMEDÄMMENDER POLYMERSCHAUMSTOFF- UND AEROGELVERBUNDARTIKEL
ARTICLE COMPOSITE THERMO-ISOLANT EN MOUSSE DE POLYMÈRE ET AÉROGEL

(30) Priority: 29.07.2009 US 229417 P
(43) Date of publication of application: 06.06.2012
(73) Proprietor: Dow Global Technologies LLC, Midland, MI 48674 (US)
(72) Inventor: VO, Van-Chau, F-67460 Souffelweyersheim (FR); MAURER, Myron, Saginaw MI 48601 (US); BUNGE, Friedhelm, D-77855 Achern (DE); MERKEL, Holger, 63110 Rodgau (DE)
(74) Representative: Beck Greener
(86) International application number: PCT/US2010/042036
(87) International publication number: WO 2011/016962

(56) References cited:
- US-A- 4 377 160
- US-A1- 2001 006 865
- DATABASE WPI Week 200574, Derwent Publications Ltd., London, GB; AN 2005-720035 -& JP 2005 299697 A (ACHILLES CORP KK) 27 October 2005

## Description

### CROSS REFERENCE STATEMENT

This application claims the benefit of U.S. Provisional Application No. 61/229,417, filed July 29, 2009.

### BACKGROUND OF THE INVENTION

### Fiend of the Invention

The present invention relates to a thermally insulating article comprising extruded thermoplastic polymer foam and aerogel material and the method of manufacturing such an article.

### Description of Related Art

Halogenated blowing agents are desirable for preparing extruded thermoplastic polymer foams for thermal insulation at least partially because halogenated molecules provide foam having a low thermal conductivity. However, there are increasing regulations on the use of halogenated molecules for applications such as blowing agents due to perceived harm such molecules have on the environment. Of particular concern is ozone depletion potential (ODP) and greenhouse warming potential (GWP) of halogenated molecules. Identifying blowing agents that have thermal conductivities as low as halogenated molecules is a tremendous challenge. As a result, it is increasingly more difficult to manufacture thermally insulating extruded thermoplastic polymer foams having desirably low thermal conductivities.

Highly thermally insulating compositions other than extruded thermoplastic polymer foams are known in the art. Aerogel materials are one type of highly thermally insulating compositions. Aerogel materials typically have low densities with cell and pore structures on the order of nanometers (for a good discussion of aerogels *see, for example,* US2007/0014979 paragraphs [0013] to [0019]. The low density of aerogel materials means most of the volume of the structure is void space. The small cell and pore dimensions of aerogel materials means there is little convection and conduction occurring through the structure. Aerogel structures have desirable thermal insulating properties but suffer from being much more costly and less durable (more fragile) than extruded thermoplastic polymer foams (*see, for example,* US2007/0014979 which teaches in paragraph 0007: "Manipulation of aerogels, one of the best known insulators, can be very challenging given the fragility of this material form.").

It would be desirable to incorporate aerogel materials into extruded thermoplastic polymer foam and achieve sufficient durability for use as thermally insulating materials for building and construction applications. Current references describe layering aerogel materials with other structurally sound materials to achieve a layered laminate. (*See, for example,* EP1106346A2, US2007/0014979A1, GB244756A, WO2008/129281A2, and US2005/0281988A1). Laminate structures, however, have aerogel material exposed on edges. Laminated structures also require adhering aerogel materials to other substrates, which can result in poor mechanical integrity of the laminated articles due to the friable character of the aerogel layer.

Despite these prior efforts, it is still desirable to develop extruded thermoplastic polymer foam articles that benefit from the thermal insulating ability of aerogel materials but with the durability, physical appearance and handling characteristics of extruded thermoplastic polymer foam articles. Such articles would be easy replacements for current extruded thermoplastic polymer foam articles. Even more desirably, such an extruded thermoplastic polymer foam article would enjoy high thermal insulating characteristics without halogenated blowing agents.

### BRIEF SUMMARY OF THE INVENTION

The present invention solves the problem of providing an extruded thermoplastic polymer foam article that enjoys thermally insulating benefits of aerogel materials but with the durability, physical appearance and handling characteristics of extruded thermoplastic polymer foam articles and without leaving aerogels exposed around the perimeter of an article or requiring adherence of the aerogel material to another substrate. Articles of the present invention enjoy low thermal conductivity characteristics (*that is,* a thermal conductivity of 35 milliwatts per meter*Kelvin or less) without halogenated blowing agents.

In a first aspect, the present invention is an article of manufacture comprising extruded thermoplastic polymer foam that has a thermoplastic polymer matrix defining a multitude of cells, the extruded thermoplastic polymer foam defining at least one cavity; and aerogel material residing within at least one cavity of the extruded thermoplastic polymer foam.

In a second aspect, the present invention is a process for manufacturing the article of the first aspect, the process comprising the following steps: (a) providing extruded thermoplastic polymer foam that defines at least one cavity; (b) providing aerogel material; and (c) inserting the aerogel material into a cavity defined by the extruded thermoplastic polymer foam.

The process of the present invention is useful for the manufacture of the foam article of the present invention. The foam article of the present invention is useful as thermal insulation in, for example, building and construction applications.

### BRIEF DESCRIPTION OF THE DRAWINGS

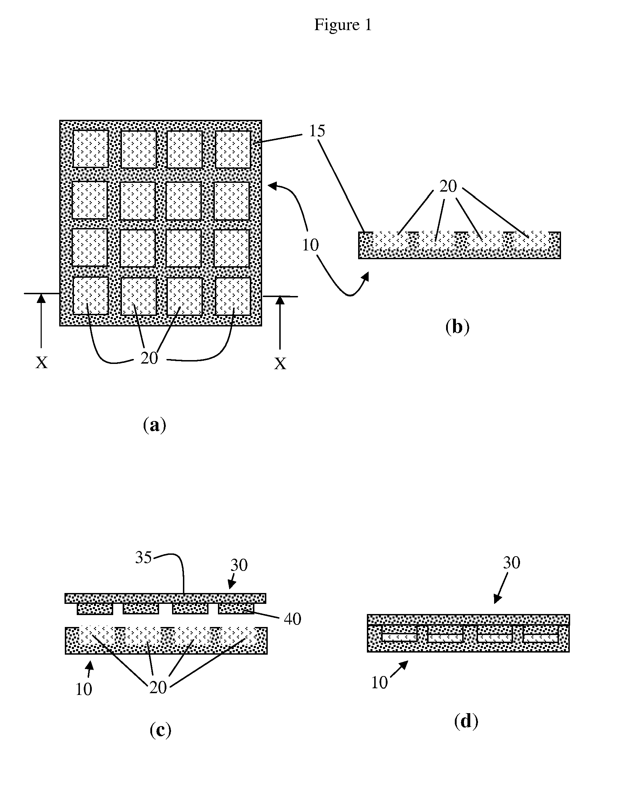

Figure 1 illustrates extruded polymeric foam components for an embodiment of an article of manufacture of the present invention.

### DETAILED DESCRIPTION OF THE INVENTION

"Cavity" is a hollow space in a material. For the sake of the present invention, a hole extending all the way through a material falls outside the scope of the term "cavity". A cavity as used herein generally is like a cave or indentation in a material. A cavity can be entirely enclosed by a material. For example, a cavity can be a void entirely enclosed by extruded thermoplastic polymer foam. A cavity in a material generally is in a form of a depression in the material. Notably, foam cells are cavities defined in a polymer matrix - but are not cavities defined in polymer foam. The article of the present invention includes a "cavity defined in a polymer foam". Foam cells do not meet that definition as they are defined in a polymer matrix and are necessary features to define polymer foam. A cell cannot be defined by a structure that itself is defined by the cell. A cavity defined in polymer foam can have dimensions exceeding ten and even 100 foam cells.

"Primary surface" is a surface of an article that has a planar surface area equal to or greater than any other surface of the article. Planar surface area refers to the area of a surface as projected onto a plane and does not take into account surface area due to peaks and valleys on a surface. Nonetheless, a primary surface can be planar or non-planar. For example, a primary surface can contain grooves, bumps, or any other contour.

Length, width and thickness are mutually orthogonal dimensions of an article. Length is a dimension of an article equal to the largest dimension. In an extruded article such as extruded foam, length generally extends along the extrusion direction of the foam. Width is equal to or larger in magnitude than the thickness. In a board-like article, thickness extends from a primary surface of the article to a surface opposing the primary surface.

ASTM refers to American Society for Testing and Materials. EN refers to European Norm. Both ASTM and EN make reference to test methods. Reference to test methods in the present document refers to the most recent test method prior to the priority date of this document unless otherwise noted. Test methods herein may specify a year of the test method as a suffix to the test number.

Multiple means "two or more". "And/or" means "and, or as an alternative to." All ranges include endpoints unless otherwise noted.

The article of the present invention comprises extruded thermoplastic polymer foam that defines at least one cavity. Extruded thermoplastic polymer foam is a particular type of foam that has been prepared by extruding a thermoplastic foamable polymer composition in a softened state through a die from a zone at a foaming pressure and temperature to an environment at a pressure below foaming pressure and typically below the foaming temperature. The foamable polymer composition expands and cools to form extruded thermoplastic polymer foam. Extruded thermoplastic polymer foam has characteristics unique from other types of polymer foams such as thermoset foam and expanded bead foams. Thermoset foams are not reversibly softenable like extruded thermoplastic polymer foam. Once foamed and cured, thermoset foam can be crushed but not melted or heat softened. In contrast, extruded thermoplastic polymer foam has a continuous thermoplastic polymer phase and as a result can melt or soften.

Expanded bead foams comprise a multitude of foamed beads affixed to one another. Each foamed bead has a skin that defines the bead. The skin of one bead is affixed to skins of adjoining beads to form expanded bead foam. Each of the foamed beads is evident in a cross section of the expanded bead foam due to the skin that surrounds the foam cells of each foam bead. Bead skins form a three-dimensional skin network throughout expanded bead foam that encapsulates localized groups of foam cells that make up each expanded bead. Often, the three-dimensional skin network is porous, which can undesirably wick water through the foam. Extruded thermoplastic polymer foam, in contrast, free of a three-dimensional skin network that encapsulate localized groups of foam cells and that extends throughout the foam. As a result, extruded thermoplastic polymer foam is generally a better thermal insulator than expanded bead foam because it does not have the three-dimensional network of skins acting as a thermal short connecting surfaces of the foam to one another. Extruded thermoplastic polymer foam also is free of the undesirable porosity often accompanying the three-dimensional skin network of expanded bead foam and, hence, is typically more moisture resistant than expanded bead foam.

Extruded thermoplastic polymer foam of the present invention comprises a continuous thermoplastic polymer that defines a multitude of cells. The thermoplastic polymer can be any one or combination of more than one extrudable thermoplastic polymer. Desirably, the thermoplastic polymer is one or a combination of more than one polymer selected from alkenyl aromatic polymers and olefinic polymers. Suitable alkenyl aromatic polymers include homo- and copolymers of styrene or substituted styrene. Particularly desirable alkenyl aromatic polymers include styrene homopolymer and styrene-acrylonitrile copolymer. Desirable olefinic polymers include ethylene and propylene homo- and copolymers.

The continuous thermoplastic polymer can have dispersed therein additives and fillers. Suitable additives and fillers include: infrared attenuating agents (*for example,* carbon black, graphite, metal flake, titanium dioxide); clays such as natural absorbent clays (*for example,* kaolinite and montmorillonite) and synthetic clays; nucleating agents (*for example,* talc and magnesium silicate); flame retardants (*for example,* brominated flame retardants such as hexabromocyclododecane and brominated polymers, phosphorous flame retardants such as triphenylphosphate, and flame retardant packages that may including synergists such as, or example, dicumyl and polycumyl); lubricants (*for example,* calcium stearate and barium stearate); and acid scavengers (*for example,* magnesium oxide and tetrasodium pyrophosphate). The total concentration of additives and/or fillers can be up to 20 weight-percent (wt%), preferably up to 15 wt% and more preferably up to 10 wt%. The amount of additives and/or fillers can be 0.05 wt% or more and even 0.1 wt% or more, even 0.2 wt% or more. Wt% of additives and/or filler is relative to total weight of continuous thermoplastic polymer.

The cells of the extruded thermoplastic polymer foam can be open celled or closed celled. The extruded thermoplastic polymer foam can be closed cell foam having an average open cell content of 30% or less, 20% or less, 10% or less, 5% or less and even 2% or less. A low extent of open cells inhibits air movement from one cell to another and thereby reduces thermal conductivity through the foam. Alternatively, the extruded thermoplastic polymer foam can have be open celled foam having an average open cell content of more than 30%, even 50% or more. Measure average open cell content according to ASTM method D6226-05.

The extruded thermoplastic polymer foam can have a uniform open cell content or a graduated open cell content. For example, it is desirable to have a graduated open cell content to cold form cavities into the foam, with a gradient extending from greater open cell content on a surface into which the cavity is formed to a lower open cell content proximate to a surface opposite the surface into which the cavity is formed. It is desirable to have a higher degree of open cells proximate to the surface experiencing most compression to enable gas pressure that would otherwise build up in cells during compression to dissipate to neighboring cells. Meanwhile, having a higher degree of closed cells proximate to the side opposing that side being compressed is desirable to obtain better barrier properties (*for example,* vapor barrier properties) and strength than is achievable with open cells. Having a gradient in open cell content as described allows the foam to simultaneously facilitate compression molding a cavity while providing optimal barrier properties and strength in the opposing surface to protect the cavity contents (*for example,* a VIP).

The extruded thermoplastic polymer foam desirably has an average cell size of less than one millimeter (mm), preferably 500 micrometers or less, more preferably 250 micrometers or less, still more preferably 150 micrometers or less and can be 100 micrometers or less. Smaller cell sizes are desirable for optimal thermal insulating properties. Typically, the cells have an average cell size of 10 micrometers or higher. Determine average cell size according to ASTM D-3576-98.

The cells of the blowing agent can contain blowing agent. Desirably, the cells are free of chlorinated blowing agent and more desirably free of halogenated blowing agent.

The extruded thermoplastic polymer foam desirably has an average density of 48 kilograms per cubic meter (kg/m³) or less, preferably 40 kg/m³ or less, more preferably 35 kg/m³ or less and still more preferably 32 kg/m³ or less. Lower density foam typically has a lower thermal conductivity than higher density foam. Typically, the extruded thermoplastic polymer foam has an average density of 16 kg/m³ or higher in order to posses structural integrity during handling and protection of aerogel material. Measure average density according to ASTM D1622-08 (Standard Test Method of Apparent Density of Rigid Cellular Plastics).

The foam can have a graduated density, which is desirable when cold forming a cavity into the foam. For example, it is desirable to have a graduated density to cold form cavities into the foam where the gradient extends from lower density proximate to a surface into which the cavity is formed to a higher density proximate to a surface opposite the surface into which the cavity is formed. It is desirable to have a lower density proximate to the surface experiencing compression to facilitate local buckling and collapse of the foam cell walls during compression. Lower density foam has less wall mass, and less wall strength. Therefore, it is easier to compress lower density foam. It is desirable to simultaneously have a higher density foam proximate to the side opposite the side being compressed to achieve maximum strength and barrier properties between that surface of the foam and the cavity in order to optimally protect contents of the cavity (for example, a VIP in the cavity). The gradient in density allows one to optimize both the compression of one side and the strength of the opposing side at the same time.

Desirably, the extruded thermoplastic polymer foam has a compressive strength of 100 kiloPascals (kPa) or higher and a modulus of two megaPascals (MPa) or higher according to EN-826. Higher compressive strengths and moduli are desirable to provide greater protection of aerogel materials.

Desirably, the extruded thermoplastic polymer foam has a water vapor permeability of less than 10 nanograms per meter per second per Pascal (ng/m*s*Pa), preferably less than 5 ng/m*s*Pa and most preferably less than 3 ng/m*s*Pa. Measure water vapor permeability according to EN12086.

The extruded thermoplastic polymer foam defines at least one cavity and can define multiple cavities. The cavity is a depression within the extruded thermoplastic polymer foam in which another object can reside. The cavity, or cavities, can have dimensions of any size that fit within extruded thermoplastic polymer foam. Typically, the cavities are depressions in a primary surface of the extruded thermoplastic polymer foam but can be depressions in other surfaces or combination of surfaces as well. Alternatively, the cavities can be depressions solely in a primary surface of a foam. A cavity can be a depression formed into an extruded thermoplastic polymer foam or a void defined by combining extruded thermoplastic polymer foam elements to define cavities (*for example,* gluing foam walls together on a surface of a foam in a manner so as to define a cavity within the walls). The extruded thermoplastic polymer foam elements that define one or more cavity can be a single extruded thermoplastic polymer foam or a combination of multiple extruded thermoplastic polymer foams, wherein the multiple extruded thermoplastic polymer foams can be the same or different in composition. *For example,* extruded polyolefin foam walls can be affixed to extruded polyalkenylaromatic polymer foam to create extruded thermoplastic polymer foam that defines one or more cavity.

The article of the present invention further comprises an aerogel material. Aerogel materials are desirable due to the extremely low thermal conductivity through an aerogel. The aerogel material resides within a cavity of the extruded thermoplastic polymer foam. More than one aerogel material may be present in the article of the present invention. More than one aerogel material can reside in a single cavity. Multiple cavities of the extruded thermoplastic polymer foam can contain aerogel material. Any single cavity can also contain one or more than one additional material, including one or more than one additional thermally insulating material, in addition to an aerogel material or instead of an aerogel material provided at least one cavity contains an aerogel material. One type of desirable additional material is a reflective material such as a metal foil or reflective coating, which further reduces thermal conductivity through the final article.

Desirably, the aerogel material resides entirely within a cavity, meaning that an insulating material can be set over the cavity and contact the surface of the extruded thermoplastic polymer foam in which the cavity resides all around the periphery of the cavity containing the aerogel material. Extruded thermoplastic polymer foam provides optimal protection of the aerogel material when the aerogel material resides entirely within a cavity of extruded thermoplastic polymer foam, especially when the aerogel material is entirely enclosed within extruded thermoplastic polymer foam. It is also desirable for any additional materials (particularly any additional thermal insulating materials) residing in a cavity with the aerogel material reside entirely within the cavity, preferably entirely enclosed by the extruded thermoplastic polymer foam.

The aerogel material can be enclosed within the cavity in which it resides, desirably enclosed by extruded thermoplastic polymer foam. For example, desirably at least 5 millimeters (mm), preferably at least 10 mm, more preferably at least 15 mm of extruded thermoplastic polymer foam encloses (separates from outside of the article) the aerogel material so as to provide optimal protection of the aerogel material.

Suitable aerogel materials include any one or combination of more than one silica aerogel, alumina aerogel, zinc oxide aerogel, carbon aerogel and/or organic aerogel (for example resorcinol formaldehyde aerogels). Suitable aerogels can be of any form including granules (*such as,* Nanogel™ materials, Nanogel is a trademark of Cabot Corporation) or fibrous blankets (*for example,* Spaceloft™ and Cryogel™ brand materials, Spaceloft and Cryogel are trademarks of Aspen Aerogels, Inc.).

Suitable metal foils for use as additional materials include aluminum, gold, silver and copper foils as well as metal coatings on plastic film (*that is,* metallized plastic film). The foils typically have a thickness of one to 100 micrometers. Metallized films can have a thickness in a range of 10 to 1500 micrometers.

In one desirable embodiment the aerogel material is fully enclosed to provide the aerogel material optimal protection. There are numerous configurations for extruded thermoplastic polymer foam having a cavity that contains aerogel material residing in it wherein the aerogel material is enclosed within the cavity and they all fall within the broadest scope of the present invention.

It is within the scope of the present invention for the extruded thermoplastic polymer foam to define or have attached thereto a flap or hinged portion that covers a cavity. In one position the hinged portion or flap reveals the cavity and in another position the hinged portion or flap covers the cavity and anything residing within the cavity. Such a hinged portion or flap can be sealed over the cavity by use of an adhesive or other fastener.

In one desirable embodiment, the article of the present invention comprises a mating component that encloses at least one cavity, preferably all cavities in the extruded thermoplastic polymer foam. The mating component can be the same or different in composition and/or properties as the extruded thermoplastic polymer foam. For example, the mating component can be extruded thermoplastic polymer foam of equivalent composition to the extruded thermoplastic polymer foam defining the cavities. Figure 1 provides an illustration of extruded polymeric foam of the present invention that comprises a mating component. Figure 1(a) illustrates extruded thermoplastic polymer foam **10** having primary surface **15** and cavities **20**. Figure 1(b) illustrates extruded thermoplastic polymer foam **10** and cavities **20** viewed as a cross section along viewing line **X** in Figure 1(a). Figure 1(c) illustrates a cross sectional view of extruded thermoplastic polymer foam **10** as in Figure 1(b) as well as a cross sectional view of mating component **30**. Mating component **30** has a primary surface **35** having the same dimensions as extruded thermoplastic polymer foam **10**. Protrusions **40** fit into cavities **20** so as to seal them. Figure 1(d) illustrates a cross sectional view of extruded foam **20** including mating component **30** configured such that mating component **30** seals cavities **20**. Any one or any combination of more than one of cavities **20** can contain aerogel material to form an article of the present invention.

In an embodiment of the present invention the aerogel can be enclosed within another material prior to being placed into a cavity. For example, it is suitable to include aerogel enclosed in a metal or polymer enclosure.

The article of the present invention desirably offers a superior combination of durability and thermal insulating properties than any of the extruded thermoplastic polymer foam or aerogel or metal film alone. The article of the present invention desirably has a thermal conductivity of 35 milliWatts per meter per Kelvin (mW/m*K) or less, preferably 32 mW/m*K or less, still more preferably 29 mW/m*K or less.

The article of the present invention can have edges that have specific profiles or shapes. For example, opposing edges of the article can have mating tongue and groove shapes or opposing laps to coordinate positioning multiple articles next to one another in a mating fashion. Profiling of the edges can be done by, for example, machining or molding and can be done before or after defining cavities and/or introduction of aerogel material into a cavity of the article.

The article can have a planar surface or a contoured surface. In one embodiment, the article has a primary surface that defines grooves extending in at least one dimension, typically the length dimension. Grooves are desirable in applications where, for example, a coating material (*for example,* mortar or cement) will be applied over the article because the coating material can penetrate into the grooves and achieve better mechanical adhesion to the article.

In general, prepare an article of the present invention by providing an extruded thermoplastic polymer foam that defines at least one cavity, providing aerogel material and inserting the aerogel material into a cavity defined by the extruded thermoplastic polymer foam.

Prepare extruded thermoplastic polymer foam in any manner. It is common to prepare extruded thermoplastic polymer foam by first forming a softened polymer composition in an extruder. The polymer composition has a continuous thermoplastic polymer phase that has a softening temperature. The thermoplastic polymers are as described above for the thermoplastic polymers of the extruded thermoplastic polymer foam. Prepare the softened polymer composition by heating the polymer composition to a temperature above its softening temperature (glass transition temperature for amorphous polymers, melting temperature for semi-crystalline polymers, and the highest glass transition temperature or melting temperature represented by thermoplastic polymers continuous in the polymer composition if there is a blend of thermoplastic polymers). If blowing agent is not already present, introduce a blowing agent into the softened polymer composition at an initial pressure that is sufficiently high so as to preclude foaming of the polymer composition in order to form a foamable polymer composition. It is often desirable to cool the foamable polymer composition to a foaming temperature that is still above the softening temperature of the polymer composition and then extrude the foamable polymer composition into an environment having a pressure lower than the initial pressure and a temperature lower than the foaming temperature. Allow the foamable polymer composition to expand into extruded thermoplastic polymer foam.

Suitable blowing agents for preparing the extruded thermoplastic polymer foam include any one or combination of more than one of the following: inorganic gases such as carbon dioxide, argon, nitrogen, and air; organic blowing agents such as water, aliphatic and cyclic hydrocarbons having from one to nine carbons including methane, ethane, propane, n-butane, isobutane, n-pentane, isopentane, neopentane, cyclobutane, and cyclopentane; fully and partially halogenated alkanes and alkenes having from one to five carbons, preferably that are chlorine-free (*e*.*g*., difluoromethane (HFC-32), perfluoromethane, ethyl fluoride (HFC-161), 1,1,-difluoroethane (HFC-152a), 1,1,1-trifluoroethane (HFC-143a), 1,1,2,2-tetrafluoroethane (HFC-134), 1,1,1,2 tetrafluoroethane (HFC-134a), pentafluoroethane (HFC-125), perfluoroethane, 2,2-difluoropropane (HFC-272fb), 1,1,1-trifluoropropane (HFC-263fb), 1,1,1,2,3,3,3-heptafluoropropane (HFC-227ea), 1,1,1,3,3-pentafluoropropane (HFC-245fa), and 1,1,1,3,3-pentafluorobutane (HFC-365mfc)); fully and partially halogenated polymers and copolymers, desirably fluorinated polymers and copolymers, even more preferably chlorine-free fluorinated polymers and copolymers; aliphatic alcohols having from one to five carbons such as methanol, ethanol, n-propanol, and isopropanol; carbonyl containing compounds such as acetone, 2-butanone, and acetaldehyde; ether containing compounds such as dimethyl ether, diethyl ether, methyl ethyl ether; carboxylate compounds such as methyl formate, methyl acetate, ethyl acetate; carboxylic acid and chemical blowing agents such as azodicarbonamide, azodiisobutyronitrile, benzenesulfohydrazide, 4,4-oxybenzene sulfonyl semi-carbazide, p-toluene sulfonyl semi-carbazide, barium azodicarboxylate, N,N'-dimethyl-N,N'-dinitrosoterephthalamide, trihydrazino triazine and sodium bicarbonate. In a desirable embodiment, the blowing agent is free of chlorinated blowing agents and more preferably free of halogenated blowing agents. Halogenated blowing agents, particularly chlorinated blowing agents, have a stigma of having an undesirable affect on the environment. Therefore, a blowing agent that is free of chlorinated or halogenated blowing agents is desirably as being more environmentally acceptable.

Use of carbon dioxide as a blowing agent, or one of multiple blowing agents, is desirable to form polymer foam having cells with a cell pressure below atmospheric pressure. Carbon dioxide escapes from a polymer foam more rapidly than air permeates into the polymer foam cells. As a result, foam cells blown with carbon dioxide have a pressure below atmospheric pressure after carbon dioxide escapes and until air can permeate in.

The extruded thermoplastic polymer foam defines at least one cavity. Define cavities in extruded thermoplastic polymer foam in any conceivable way. Suitable means of defining a cavity include routing, assembling multiple extruded foam components together in a way that define one or more cavity, and cold forming and/or hot forming by compressing to form one or more than one depression. It is within the scope of the present invention to combine multiple extruded thermoplastic polymer foam elements together to define one or more than one cavity as described with the article of the present invention for the extruded thermoplastic polymer foam. The extruded thermoplastic polymer foam elements can have the same composition and properties or different composition and/or properties. Another method of introducing a cavity is to make a cut into extruded thermoplastic polymer foam so as to create a flap of foam and then removing a portion of the extruded thermoplastic polymer foam under the flap. The flap then can serve as a cover to seal the cavity and its contents.

Extruded thermoplastic polymer foam can define a cavity in any surface, but typically defines one or more cavity in a primary surface of the extruded thermoplastic polymer foam. The cavity or cavities can have any size or shape within the dimension of the extruded thermoplastic polymer foam. Typically, the cavity (or cavities) has dimensions exceeding ten or even exceeding 100 cell dimensions. To be clear, the cells of the foam are not "cavities" defined by the foam within the use of the term herein but rather are defined by a polymer matrix to transform the polymer matrix into foam. Cavities defined by the foam are defined by the cellular polymer matrix, which necessarily includes foam cells.

One particularly desirable method for defining a cavity, or multiple cavities, in a polymer foam is by using a cold forming process. United States patent application US2009/0062410A provides a general description of a cold forming process. In general, introduce cavities into a polymer foam by cold forming by pressing a molding projection into a polymer foam article thereby compressing a portion of the polymer foam article by the projection to create a cavity. The pressing and compression takes place at a temperature below the softening temperature of the polymer foam, typically at or near ambient temperature (approximately 25°C), hence the name "cold" forming.

Cold forming offers a particularly desirable article of the present invention because compressing the polymer foam article to form cavities densifies the portion of foam between the cavity and the outer surface of the foam opposite the foam surface into which the cavity is impressed. That densified portion beneficially has a higher durability than surrounding non-compressed foam and thereby offers improved protection of aerogel material that resides in the cavity of the final article from forces applied from outside the foam. The densified portion of foam has a higher density than the foam on average.

For cold forming cavities, it is ideal to use an extruded thermoplastic polymer foam having any one, any combination of two, three or having all four of the following characteristics: (a) a cell pressure (pressure within the cells of the foam) that is below one atmosphere, preferably 0.75 atmospheres or less; (b) higher open cell content proximate to a surface impressed by a mold to form a cavity (*that is,* an "impression surface") than proximate to a surface opposing the impression surface, preferably having a graduated open cell content; (c) a lower density proximate to an impression surface than proximate to a surface opposing the impression surface, preferably having a graduated density; and (d) an anisotropic compressive balance with a higher compressive balance in the dimension of compression than dimensions orthogonal to compression. The first characteristic (cell pressure) facilitates compression without fracturing foam surrounding the compressed portions of foam. The advantages of (b) and (c) are set forth above in discussing extruded polymeric foam properties. The benefit of (d) is that it promotes plastic versus elastic buckling of cell walls during cold forming compression.

Provide aerogel material and insert the aerogel material into a cavity defined by the extruded thermoplastic polymer foam. It is acceptable to insert more than one aerogel material into a single cavity, including more than one type of aerogel material (*for example,* a combination of metal foil and aerogel or two different types of aerogel materials). It is also acceptable to insert aerogel material into more than one cavity if the extruded polymeric foam defines more than one cavity.

The articles of the present invention are particularly useful as thermal insulating materials. One method of using the present articles is to provide the article and then position the article as a barrier between two different areas. For example, position articles of the present invention on a wall of a building structure to thermally insulate the inside of the structure from the outside of the structure. As another example, position the articles of the present invention as walls around a container to thermally insulate the inside of the container from the outside of the container.

### Examples

The following examples serve to further illustrate specific embodiments of the present invention.

Provide an extruded thermoplastic polymer foam plank (110 mm thick, 600 mm wide, 2200 mm long) that has a cell pressure below atmospheric pressure, an anisotropic compressive balance with a high vertical compressive balance, a density gradient of about 19% from core to surface (core has a density 19% lower than the surface) and an open cell content gradient such that the core is has a higher open cell content than the surface. One such foam is freshly foamed IMPAXX™ 300 brand energy absorbing foam (IMPAXX is a trademark of The Dow Chemical Company). The foam has an average density of 35 kg/m³ and a compressive strength at 23°C of 345 kPa at 10% compression, 375 kPa at 25% compression and 434 kPa at 50% compression according to ASTM D1621. Cut the planks lengthwise (parallel to a primary surface) through the middle of the plank's thickness dimension to create two foam boards having a thickness of approximately 55 mm. The cut surfaces reveal the core of the foam, which has a lower density and higher open cell content than the uncut opposing surface, and serve as impression surfaces for the foams. Remove the skin of the uncut surface opposite the cut surface (impression surface) to a depth of 7 mm. Cut the resulting skinned foam using a Baumer abrasive wire saw to produce a polymer foam article having a length and width of 305 mm and a thickness of 53 mm to produce a cold forming foam blank. Prepare two cold forming foam blanks for each sample.

Provide a cavity forming molding tool that has dimensions of 300 mm by 200 mm by 60 mm thick and that defines 16 square projections 59.12 mm by 59.12 mm extending 30 mm of from a base, the projections being equally spaced and separated from one another by a 12.7 mm spacing. Such a cavity forming molding tool can be prepared as a rapid prototype tool comprising ABS as designed and built using a Maxum Fused Deposition Modeling process.

Mount the cavity forming molding tool to a moving platen on a Carver compression molding machine. Position a cold forming foam blank on the stationary platen of the compression molding machine with the impression surface facing the cavity forming molding tool. With the cold forming foam blank and cavity forming molding tool at ambient temperature (approximately 25°C), compress the cavity forming molding tool into the cold forming foam blank with 66.7 kiloNewtons (kN) (15,000 pounds) of hold force at a pump speed of 90%, then relieve the compression and remove the cold forming foam blank. The cold forming foam blank has 16 equally spaced cavities, corresponding the 16 projections on the cavity forming molding tool, that have a depth of approximately 28 mm. The resulting cold forming foam blank serves as a cavity foam and has an appearance similar to extruded foam **10** in Figure 1.

Repeat the process on a second cold forming foam blank using a lid forming molding tool instead of a cavity forming molding tool. The lid forming molding tool has 16 square cavities having dimensions of 59.08 mm by 59.08 mm by 10.02 mm deep separated from one another by 12.74 mm so as to mate with the cavity forming molding tool projections. Compress the lid forming molding tool against the impression surface of the second cold forming foam blank using the Carver compression molding machine at 66.7 kN (15,000 pounds) of hold force to form 16 projections in the cold forming foam blank that extend approximately nine mm above the compressed surface outlining the projections. The resulting cold forming foam blank serves as a lid foam and has an appearance similar to extruded foam **30** of Figure 1.

The lid foam mates with the cavity foam such that the projections of the lid foam fit into and seal the cavities of the cavity foam to form 16 enclosed cavities, as illustrated with extruded foams **10** and **30** in Figure 1.

***Comparative Example** A.* Measure the thermal conductivity of the cavity foam mated with the lid foam, but without including aerogel. Mate the extruded polymeric foam boards so that the protrusions extend into the cavities and the board with the protrusions seals the cavities.

***Example 1**.* Repeat Comparative Example (Comp Ex) A except insert aerogel material (Spaceloft™-9251, Spaceloft is a trademark of Aspen Aerogels) to a thickness of nine millimeters in each cavity of the cavity foam prior to mating the cavity foam and lid foam together. The aerogel in the final article is encapsulated within the extruded thermoplastic polymer foam board composition.

***Example 2**.* Repeat Example 1 but additionally include a 50 micrometer thick layer of aluminum foil in each cavity after inserting the aerogel but before mating the cavity foam and lid foam together.

***Example 3**.* Repeat Example 1 except insert the aerogel material to a thickness of 18 millimeters in each cavity.

***Example 4**.* Repeat Example 3 but additionally include a 50 micrometer thick layer of aluminum foil in each cavity after inserting the aerogel but before mating the two extruded polymer boards together.

Measure the thermal conductivity of each of the samples according to ASTM C-578 and the compressive modulus of each sample according to EN-826. Table 1 contains results for the samples.

**Table 1**

| **Sample** | **Description** | **Thermal Conductivity (mW/m*K)** | **Compressive Modulus (kilopascals)** |
|---|---|---|---|
| Comp Ex. A | Extruded Foam with Cavities | 45 | 2230 |
| Ex 1 | Extruded foam with cavities containing 9 mm aerogel | 33 | 2260 |
| Ex 2 | Extruded foam with cavities containing 9 mm aerogel and 50 micrometer aluminum foil | 30 | 2380 |
| Ex 3 | Extruded foam with cavities containing 18 mm aerogel | 27 | 2640 |
| Ex 4 | Extruded foam with cavities containing 18 mm aerogel and 50 micrometer aluminum foil | 27 | 2230 |

These results illustrate a number of aspects of the present invention. First, including aerogel in the cavities decreases thermal conductivity of the extruded thermoplastic polymer foam article quite dramatically and to a value below that of either solid extruded foam or the extruded foam with empty cavities. Including just nine millimeters of aerogel in the cavities reduces the thermal conductivity of the article to 33 mW/m*K (Ex 1). Including 18 mm of aerogel in the cavities reduces the thermal conductivity of the article to 27 mw/m*K (Ex 2). Both of these thermal conductivities are below that of just foam either with or without cavities.

Second, the compressive strength of the extruded thermoplastic polymer foam articles actually increased with inclusion of aerogel, which is evidence of not only the protective aspect of enclosing the aerogel in the extruded thermoplastic polymer foam but that the combination actually increases the article strength.

Third, inclusion of 50 micrometers of aluminum foil in combination with aerogel into the cavities can further decrease thermal conductivity through the foam article even over the foam article containing just the aerogel material, particularly for thinner aerogel materials.

Surprisingly, the examples achieve thermal conductivity values below 35 mW/m*K, even below 30 mW/m*K with an absence of halogenated blowing agent.

The Examples all illustrate a dramatic reduction in thermal conductivity, even over solid extruded foam prior to defining cavities (36 mW/m*K) while maintaining a compressive modulus well above that of aerogel materials (less than 100 kPa). The higher compressive modulus of the extruded thermoplastic polymer foam protects the weaker aerogel material in the articles of the present invention while the aerogel material reduces the thermal conductivity through the article.

## Claims

1. An article of manufacture comprising:
a. an extruded thermoplastic polymer foam that has a thermoplastic polymer matrix defining a multitude of cells, the extruded thermoplastic polymer foam defining at least one cavity; and
b. aerogel material residing within at least one cavity of the extruded thermoplastic polymer foam.

2. The article of Claim 1, wherein the extruded thermoplastic polymer foam is free of halogenated blowing agents and has a thermal conductivity of 35 milliWatts per meter per Kelvin or less.

3. The article of Claim 1, wherein the extruded thermoplastic polymer foam defines multiple distinct cavities and residing within more than one distinct cavity are aerogel materials.

4. The article of Claim 1, wherein the aerogel material is entirely enclosed within extruded thermoplastic polymer foam.

5. The article of Claim 1, wherein at least one cavity of the extruded thermoplastic polymer foam includes both aerogel and an additional insulating material.

6. The article of Claim 1, wherein the extruded thermoplastic polymer foam has opposing first and second surfaces with at least one cavity defined in a first surface and wherein the portion of extruded thermoplastic polymer foam between the cavity and the second surface has a higher density than the extruded thermoplastic polymer foam on average.

7. The article of Claim 1, wherein the aerogel is enclosed in a metal or polymer enclosure and the combination of the enclosure and aerogel reside in a cavity.

8. A process for manufacturing the article of Claim 1, the process comprising the following steps: (a) providing an extruded thermoplastic polymer foam that defines at least one cavity; (b) providing aerogel material; and (c) inserting the aerogel material into a cavity defined by the extruded thermoplastic polymer foam.

9. The process of Claim 8, wherein step (a) includes extruding the polymer foam in an absence of halogenated blowing agent.

10. The process of Claim 8, wherein the polymer foam defines multiple distinct cavities and step (b) includes providing multiple aerogel materials and step (c) includes inserting aerogel materials into multiple distinct cavities of the polymer foam.

11. The process of claim 8, wherein step (a) include cold forming at least one cavity into the extruded thermoplastic polymer foam.

12. The process of Claim 8, further including step (d) of enclosing the aerogel material within the cavity with extruded thermoplastic polymer foam.

13. The process of Claim 8, including adding to at least one cavity of the extruded thermoplastic polymer foam both aerogel material and an additional insulating material.

14. A process for using the article of Claim 1 comprising the steps: (a) providing an article of Claim 1; and (b) positioning the article of Claim 1 as a barrier between two different areas.

## Patentansprüche

1. Ein Herstellungsartikel, der Folgendes beinhaltet:
a. einen extrudierten thermoplastischen Polymerschaumstoff, der eine thermoplastische Polymermatrix, die eine Vielzahl von Zellen definiert, aufweist, wobei der extrudierte thermoplastische Polymerschaumstoff mindestens eine Aussparung definiert; und
b. Aerogelmaterial, das sich in der mindestens einen Aussparung des extrudierten thermoplastischen Polymerschaumstoffs befindet.

2. Artikel gemäß Anspruch 1, wobei der extrudierte thermoplastische Polymerschaumstoff frei von halogenierten Treibmitteln ist und eine Wärmeleitfähigkeit von 35 Milliwatt pro Meter pro Kelvin oder weniger aufweist.

3. Artikel gemäß Anspruch 1, wobei der extrudierte thermoplastische Polymerschaumstoff mehrere individuelle Aussparungen definiert und sich in mehr als einer individuellen Aussparung Aerogelmaterialien befinden.

4. Artikel gemäß Anspruch 1, wobei das Aerogelmaterial vollständig von dem extrudierten thermoplastischen Polymerschaumstoff umschlossen ist.

5. Artikel gemäß Anspruch 1, wobei mindestens eine Aussparung des extrudierten thermoplastischen Polymerschaumstoffs sowohl Aerogel als auch ein zusätzliches Isoliermaterial umfasst.

6. Artikel gemäß Anspruch 1, wobei der extrudierte thermoplastische Polymerschaumstoff eine erste und zweite Oberfläche, die einander entgegensetzt sind, aufweist, wobei mindestens eine Aussparung in einer ersten Oberfläche definiert ist, und wobei der Abschnitt des extrudierten thermoplastischen Polymerschaumstoffs zwischen der Aussparung und der zweiten Oberfläche eine höhere Dichte als der extrudierte thermoplastische Polymerschaumstoff im Durchschnitt aufweist.

7. Artikel gemäß Anspruch 1, wobei das Aerogel von einer Metall- oder Polymerhülle umschlossen ist und sich die Kombination aus der Hülle und dem Aerogel in einer Aussparung befindet.

8. Ein Verfahren zum Herstellen des Artikels gemäß Anspruch 1, wobei das Verfahren die folgenden Schritte beinhaltet: (a) Bereitstellen eines extrudierten thermoplastischen Polymerschaumstoffs, der mindestens eine Aussparung definiert; (b) Bereitstellen von Aerogelmaterial; und (c) Einfügen des Aerogelmaterials in eine von dem extrudierten thermoplastischen Polymerschaumstoff definierte Aussparung.

9. Verfahren gemäß Anspruch 8, wobei Schritt (a) das Extrudieren des Polymerschaumstoffs in Abwesenheit von halogeniertem Treibmittel umfasst.

10. Verfahren gemäß Anspruch 8, wobei der Polymerschaumstoff mehrere individuelle Aussparungen definiert und Schritt (b) das Bereitstellen mehrerer Aerogelmaterialien umfasst und Schritt (c) das Einfügen von Aerogelmaterialien in mehrere individuelle Aussparungen des Polymerschaumstoffs umfasst.

11. Verfahren gemäß Anspruch 8, wobei Schritt (a) das Kaltformen mindestens einer Aussparung in dem extrudierten thermoplastischen Polymerschaumstoff umfasst.

12. Verfahren gemäß Anspruch 8, das ferner den Schritt (d) des Umschließens des Aerogelmaterials in der Aussparung mit extrudiertem thermoplastischem Polymerschaumstoff umfasst.

13. Verfahren gemäß Anspruch 8, das das Hinzufügen sowohl von Aerogelmaterial als auch einem zusätzlichen Isoliermaterial zu mindestens einer Aussparung des extrudierten thermoplastischen Polymerschaumstoffs umfasst.

14. Ein Verfahren zur Verwendung des Artikels gemäß Anspruch 1, das die folgenden Schritte beinhaltet: (a) Bereitstellen eines Artikels gemäß Anspruch 1; und (b) Positionieren des Artikels gemäß Anspruch 1 als eine Barriere zwischen zwei unterschiedlichen Bereichen.

## Revendications

1. Un article manufacturé comprenant :
a. une mousse de polymère thermoplastique extrudée qui a une matrice de polymère thermoplastique définissant une multitude de cellules, la mousse de polymère thermoplastique extrudée définissant au moins une cavité ; et
b. un matériau aérogel résidant au sein d'au moins une cavité de la mousse de polymère thermoplastique extrudée.

2. L'article de la revendication 1, dans lequel la mousse de polymère thermoplastique extrudée est dépourvue d'agent d'expansion halogéné et a une conductivité thermique de 35 milliwatts par mètre par Kelvin ou moins.

3. L'article de la revendication 1, dans lequel la mousse de polymère thermoplastique extrudée définit de multiples cavités distinctes et, résidant au sein de plus d'une cavité distincte, se trouvent des matériaux aérogel.

4. L'article de la revendication 1, dans lequel le matériau aérogel est entièrement enclos au sein de la mousse de polymère thermoplastique extrudée.

5. L'article de la revendication 1, dans lequel au moins une cavité de la mousse de polymère thermoplastique extrudée inclut à la fois un aérogel et un matériau isolant supplémentaire.

6. L'article de la revendication 1, dans lequel la mousse de polymère thermoplastique extrudée a des première et deuxième surfaces opposées avec au moins une cavité définie dans une première surface et dans lequel la portion de mousse de polymère thermoplastique extrudée entre la cavité et la deuxième surface a une masse volumique plus grande que la mousse de polymère thermoplastique extrudée en moyenne.

7. L'article de la revendication 1, dans lequel l'aérogel est enclos dans une enceinte de métal ou de polymère et la combinaison de l'enceinte et de l'aérogel réside dans une cavité.

8. Un procédé pour fabriquer l'article de la revendication 1, le procédé comprenant les étapes suivantes : (a) le fait de fournir une mousse de polymère thermoplastique extrudée qui définit au moins une cavité ; (b) le fait de fournir un matériau aérogel ; et (c) le fait d'insérer le matériau aérogel dans une cavité définie par la mousse de polymère thermoplastique extrudée.

9. Le procédé de la revendication 8, dans lequel l'étape (a) inclut le fait d'extruder la mousse de polymère en l'absence d'agent d'expansion halogéné.

10. Le procédé de la revendication 8, dans lequel la mousse de polymère définit de multiples cavités distinctes et l'étape (b) inclut le fait de fournir de multiples matériaux aérogel et l'étape (c) inclut le fait d'insérer des matériaux aérogel dans de multiples cavités distinctes de la mousse de polymère.

11. Le procédé de la revendication 8, dans lequel l'étape (a) inclut le fait de former à froid au moins une cavité dans la mousse de polymère thermoplastique extrudée.

12. Le procédé de la revendication 8, incluant en outre l'étape (d) consistant à enclore le matériau aérogel au sein de la cavité avec la mousse de polymère thermoplastique extrudée.

13. Le procédé de la revendication 8, incluant le fait d'ajouter dans au moins une cavité de la mousse de polymère thermoplastique extrudée à la fois un matériau aérogel et un matériau isolant supplémentaire.

14. Un procédé pour utiliser l'article de la revendication 1 comprenant les étapes consistant à : (a) fournir un article de la revendication 1 ; et (b) positionner l'article de la revendication 1 en tant que barrière entre deux zones différentes.
